# EUROPÄISCHE PATENTSCHRIFT

(11) **EP 0 934 152 B1**
(45) Veröffentlichungstag und Bekanntmachung des Hinweises auf die Patenterteilung: **02.08.2000**
(21) Anmeldenummer: 97938725.5
(22) Anmeldetag: 12.09.1997
(51) Int. Cl.: B29C 70/76, B29C 70/84, B29C 45/14

(54) **VERFAHREN UND VORRICHTUNG ZUM EINFASSEN VON DECORMATERIAL**
METHOD AND DEVICE FOR FRAMING A DECORATIVE ELEMENT
PROCEDE ET DISPOSITIF D'ENCADREMENT D'UN ELEMENT DECORATIF

(30) Priorität: 24.10.1996 CH 260496
(43) Veröffentlichungstag der Anmeldung: 11.08.1999
(73) Patentinhaber: Kaufmann, Georg, 5442 Fislisbach (CH)
(72) Erfinder: Kaufmann, Georg, 5442 Fislisbach (CH)
(74) Vertreter: EGLI-EUROPEAN PATENT ATTORNEYS
(86) Internationale Anmeldenummer: CH9700337
(87) Internationale Veröffentlichungsnummer: WO9817461

(56) Entgegenhaltungen:
- CA-A- 960 827
- DE-A- 3 712 882
- FR-A- 2 550 848
- GB-A- 1 271 860
- GB-A- 1 575 962
- US-A- 4 491 556

## Beschreibung

Die Erfindung betrifft gemäss einem ersten Aspekt ein Verfahren zum Einfassen von Decormaterial, insbesondere eines Teppichs, eines Gewebes bzw. einer Folie, bei welchem in einer Werkzeugform zum Hinterpressen und/oder Hinterspritzen zumindest an Teilen eines Randes dieses Decormaterials eine einstückige Einfassung ausgebildet wird gemäß dem Oberbegriff des Patentanspruchs 1. Die Einfassung umfaßt ein Bord, das sich im wesentlichen rechtwinklig zur Hauptausdehnungsrichtung und entlang des Randes dieses Decormaterials erstreckt, wobei das Herstellen des Bordes und der Verbindung mit dem Decormaterial in einem Arbeitsgang geschieht.

Gemäss einem zweiten Aspekt betrifft die Erfindung eine Vorrichtung zum Einfassen von Decormaterial gemäß dem Oberbegriff des Patentanspruchs 11.

Ferner betrifft die Erfindung eine Einfassung eines Dekormaterials gemäß dem Oberbegriff des Patentanspruchs 18.

Decormaterialien, wie Auflege- oder Auskleideteppiche für Automobile werden konventionellerweise gebördelt. Diese Bördelung ist der gewünschten Flexibilität des Teppichrandes (Anpassung an gegebene Unebenheiten) im allgemeinen nicht abträglich. Solche Bördelungen sind aber teuer in der Herstellung und neigen zudem verstärkt zur Verschmutzung. Die Lebensdauer eines solchen Auflegeteppichs wird meist gerade durch eine beschädigte Bördelung begrenzt. Eingedenk dieser Problematik werden Auflegeteppiche für Automobile beispielsweise so hergestellt, dass zuerst ein strapazierfähiges Trägermaterial aus Kunststoff mittels der Spritzgusstechnik hergestellt wird. In dieses Trägermaterial muss in einem weiteren Arbeitsschritt ein Decormaterial, d.h. ein zugeschnittener Teppich, eingeklebt werden. Um Zuschneidetoleranzen beim Teppich auffangen bzw. kaschieren zu können, aber auch um eine verstärkte Einfassung des Teppichrandes zur Verfügung zu stellen, wird das Trägermaterial vorzugsweise mit einem Hinterschnitt produziert. Dieser Hinterschnitt löst einerseits das Problem der Zuschneidetoleranzen, andrerseits stellt sich jetzt ein neues Problem: Zum Herstellen eines sauberen Hinterschnitts mit einer Auskragung, die geeignet ist, Toleranzen von mehreren Millimetern abzudecken, sind komplizierte d.h. teure Spritzgussformen mit entsprechenden Schiebersystemen notwendig. Nur mit Hilfe solcher Schiebersysteme wird ein schadenfreies Entformen des fertiggeformten Trägermaterials überhaupt möglich. Zudem erweisen sich in dieser Art eingefasste Teppichränder als zu wenig flexibel. Ausserdem bedeutet in der Praxis der Arbeitsschritt des Aufklebens des Decormaterials auf das Trägermaterial eine zusätzliche Verteuerung des Endproduktes.

In vielen Gebieten der Technik werden Bauteile aus Kunststoff verwendet, die neben funktionalen Anforderungen auch ästhetische Ansprüche erfüllen müssen. Dazu ist als ein Beispiel von vielen der Automobilbau zu nennen, wo für Innenverkleidungen, Hutablagen, Kofferraumabdeckungen, Armaturenbrett u.ä. solche Kunststoffbauteile Verwendung finden. Um diese ästhetisch ansprechend zu gestalten, wird deshalb auf einer Sichtseite des Kunststoffbauteils oftmals als gesonderte Oberflächenschicht eine Decorschicht angebracht. Aus Gründen einer unproblematischen Entsorgung bzw. einer vereinfachten Wiederverwendung sollte das Decormaterial vorzugsweise aus dem gleichen Material wie der tragende Kunststoffbauteil hergestellt sein. Solche Monomaterialien lassen sich somit wesentlich kostengünstiger rezyklieren als Mischmaterialien, die zuerst getrennt werden müssen. Zur Herstellung derartiger Kunststoffbauteile wurde das sogenannte Hinterpressverfahren entwickelt. Dieses Verfahren ist in der Publikation "Kunststoffe im Automobilbau, VDI-Verlag GmbH, Düsseldorf 1994" beschrieben. Es sieht vor, dass an einem Werkzeugoberteil einer geöffneten Werkzeugform eine Decorschicht so befestigt wird, dass es die Oberfläche des Werkzeugoberteils gegebenenfalls vollflächig bedeckt. Anschliessend wird in die weiterhin geöffnete Werkzeugform eine geschmolzene und daher fliessfähige Kunststoffmasse eingespritzt bzw. eingelegt. Danach wird die Form geschlossen, wodurch sich unter dem Schliessdruck die Kunststoffmasse gleichmässig in der Form verteilt und, zumindest bei Decormaterialien mit Poren, wie beispielsweise bei textilen Materialien, teilweise in das Decormaterial eindringt. Die Kunststoffmasse erstarrt im folgenden und geht dabei mit der Decorschicht eine innige Verbindung ein. Dieses Hinterpressverfahren kann auch mit dem Hinterspritzverfahren kombiniert werden.

Ein solches Hinterpress- und/oder Hinterspritzverfahren kann verwendet werden, um eine für ein Decormaterial geeignete Trägerschicht zu produzieren. Mit der einstückigen Herstellung dieser Trägerschicht, welcher ein Rand angeformt sein könnte, würden die Zuschneidetoleranzen im Teppich ausgeglichen und die Produktion um den Arbeitsgang des Aufklebens des Teppichs vereinfacht. Ein grosses Problem stellt dabei aber die Positionierung des Randes des Decormaterials in der Kavität einer Werkzeugform zum Hinterpressen bzw. Hinterspritzen dar. Durch das Verdrängpressen der eingefüllten Kunststoffmaterialschmelze kann der Rand des Decormaterials in nicht vorhersagbarer Weise beispielsweise gestaucht oder angehoben werden. Eine saubere Ausbildung einer Einfassung, welche zuverlässig den Rand des Decormaterials abdeckt, kann somit nicht gewährleistet werden. Zudem wird auf diese Weise die gewünschte Flexibilität des Randes kaum erreicht.

Aus dem Stand der Technik bekannte Vorrichtungen und Verfahren offenbaren Mittel zur Verstärkung der Verbindung Decormaterial - Trägerschicht, sie schlagen aber keine Mittel zur Gestaltung einer flexibleren Einfassung des Randes eines Decormaterials vor:

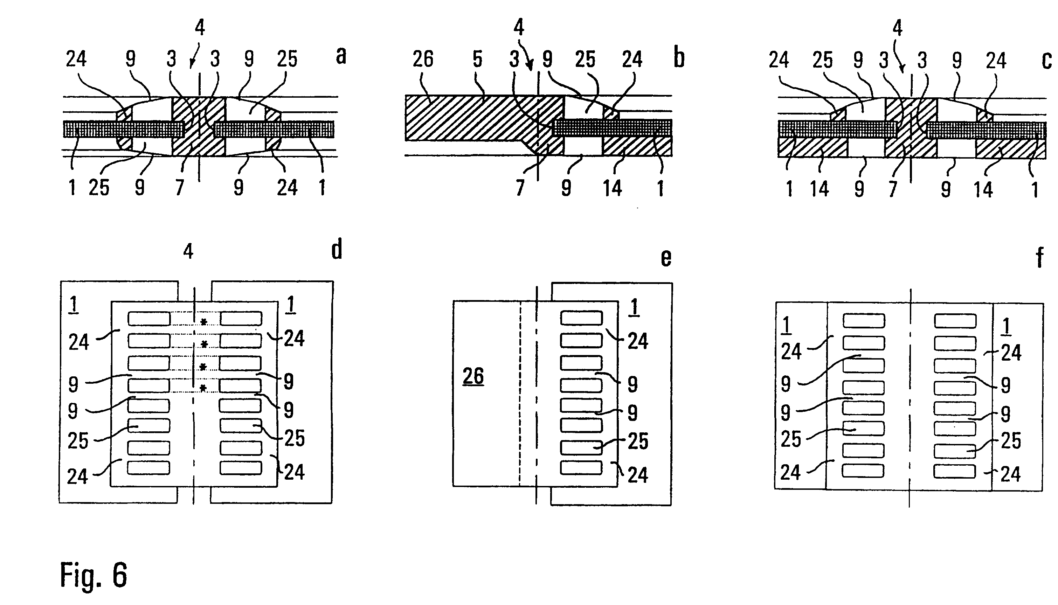

Aus US 4,491,556 ist ein Verfahren und eine Vorrichtung zur Produktion einer Teppichmatte mit einer Spritzgusseinheit bekannt, die zwei Formen umfasst. In einer ersten Form mit einer Vertiefung zur Aufnahme eines Teppichs, welche parallel zur Teilungslinie verläuft, ist eine Vielzahl von Gruben angeordnet. Diese Gruben entsprechen Intervallen, welche in jenem Teil einer zweiten Form angeordnet sind, welcher der Vertiefung der Teppichaufnahme entspricht. Dabei weist zumindest eine der Formen eine Kavität zur Formung der Kanten einer Mattenunterlage auf und das Verfahren umfasst das Einpassen eines Teppichs in diese Aufnahmevertiefung, das Einspritzen eines thermoplastischen Harzes in den Raum zwischen dem Teppich und den Gruben, um eine Mattenunterlage zu schaffen, welche gleichzeitig mit dem Teppich verbunden wird. Hauptsächlich handelt es sich hier um das Unterlegen des Teppichmaterials mit einem Kunststoffbett (vgl. Fig. 6 und 7).

DE 37 12 882 betrifft ein Auskleidungsformteil, insbesondere eine Bodenauflage eines Kraftfahrzeuges, welches eine eingefasste Teppich- und Zusatzlage aufweist. Die Einfassung ist von einem Vollprofil-Kunststoffkörper gebildet. Dieser ist direkt an die Ränder der Teppichlage und der Zusatzlage angeformt. Im Bereich des Randes der Teppichlage ist deren Flor in den Kunststoffkörper eingebettet.

CA 960 827 betrifft ein Verfahren zur Herstellung eines Utensils (insbesondere Siebdeckel zum Abdecken einer Bratpfanne beim Anbraten von Fleisch), das ein Metallgitter und einen gegossenen Plastikring umfasst. Dabei besteht der Plastikring aus einem thermoplastischen Material und umfasst den Rand des Gitters. Das Verfahren umfasst die folgenden Schritte: Herstellung eines Metallgitters mit zumindest einem Markierungsloch; Bereitstellen einer zweiteiligen Gussform, die einen Hohlraum umfasst, mittels dem ein äusserer Ring gegossen werden kann, welcher so geformt ist, dass das Metallgitter eingefasst und getragen wird; Bereitstellen zumindest eines Stiftes in einem Formteil, der jeweils zu einem Markierungsloch des Gitters passt; Bereitstellung einer Vertiefung im anderen Formteil, in welche der Stift hineinpasst, wenn die beiden Formteile zusammengefügt werden; Ausrichtung des Metallgitters mit allen Markierungslöchern und darin angeordneten Stiften; Schliessen der Form und Ausführen der Spritzguss-Operation. Zum Zwecke der Stabilitätsverbesserung soll die Verbindung Metallgitter-Ring verstärkt werden.

GB 1 271 860 betrifft die Herstellung von Filterelementen, die aus einer Filtriermembran bestehen, deren Aussenrand in einem Dichtungselement eingebettet ist. Zum besseren Halten der Membran während dem Spritzgiessen weisen beide Formhälften Zapfen auf, welche immer auf der anderen Formhälfte angeordneten Zapfen gegenüberliegen, so dass eine Membran, welche zwischen die Formhälften gelegt wird, mittels der Zapfenpaare sicher gehalten wird, auch wenn mit grossem Druck eingespritzt wird. Innen an den Zapfen wird ein Haltering angegossen. Dieser Haltering wird über einige Stege mit dem äusseren Ring - der als Dichtungselement wirkt - verbunden.

Die Aufgabe der Erfindung umfasst das Bereitstellen von Einfassungen von Decormaterialien, insbesondere Teppichen, Textilien oder Folien, mit einer durch Hinterpressen und/oder Hinterspritzen einer fliessfähigen Masse angeformten Einfassung, die mindestens Teile des Randes dieser Decormaterialien sauber einfasst, verstärkt und eine gegenüber dem Stand der Technik verbesserte Flexibilität bietet und bei deren Produktion auf die Verwendung von Schiebern zur Herstellung eines Hinterschnittes verzichtet werden kann.

Gemäss einem ersten Aspekt der Erfindung wird diese Aufgabe durch das Verfahren nach Patentanspruch 1 gelöst.

Bei der Durchführung dieses Verfahrens wird als fliessfähige bzw. pastöse Masse eine Kunststoffschmelze bevorzugt.

Die Aufgabe wird ausserdem erfindungsgemäss durch die Vorrichtung nach Patentanspruch 11 gelöst.

Ferner wird die oben genannte Aufgabe erfindungsgemäß durch die Einfassung nach Patentanspruch 18 gelöst.

Spezielle Ausgestaltungen des erfindungsgemässen Verfahrens und der erfindungsgemässen Vorrichtung finden sich in den Unteransprüchen, in welchen auch Produktionsmittel bzw. Formteile wie Vertiefungen, Stege und dergleichen zum Anformen von Stegen, Traggittern, Tragplatten, Noppen, Leisten, Öffnungen und dergleichen, sowie zum Einfassen von gleichen oder unterschiedlichen Decormaterialien bzw. zum Herstellen eines Einsatzes auf einer Seite oder beidseits eines gegebenenfalls ein- oder zweiseitig verengten Bordes aufgeführt sind.

Das vorstehend beschriebene Verfahren eignet sich grundsätzlich für alle Kunststoffe und anderen fliessfähigen bzw. pastösen Massen, welche erstarren können und die durch das Hinterpressverfahren bzw. durch Hinterspritzen verarbeitbar sind. Als Oberflächenschicht bzw. Decorschicht können solche Materialien verwendet werden, die bei dem Hinterpressvorgang eine feste Verbindung mit einer solchen Masse bzw. mit einem solchen Kunststoff eingehen. Lediglich beispielhaft seien dazu textile Materialien, wie Teppiche und Gewirke, sowie Kunststoffolien genannt. Es werden jedoch solche Kombinationen von Massen bzw. Kunststoffen und Materialien der Decorschicht bevorzugt, die sortenrein sind, so dass das eingefasste Decormaterial nach seinem bestimmungsgemässen Gebrauch mit geringem Aufwand zerkleinert und als Monomaterial wiederverwertet werden kann.

Die erfindungsgemäss an das Bord angeformten Finger entstehen durch entsprechende Aussparungen in einer oder beiden Werkzeugform-Hälften. Zwischen diesen Aussparungen erstrecken sich Haltestege der Werkzeugform bis zum Bord, d.h. bis über den Rand der eingelegten Decormaterialien hinaus und liegen direkt dem Decormaterial an. Dadurch ist beim Verdrängpressen bzw. beim Hinterspritzen der fliessfähigen Masse bzw. Kunststoffmaterialschmelze gewährleistet, dass diese - zur Ausbildung des Bordes und der Finger - das Decormaterial umfliessen kann, dass aber das Decormaterial an seinem Rand zuverlässig gehalten und in der Kavität der Werkzeugform positioniert ist. Deformation wie beispielsweise Stauchungen oder Anhebungen des Decormaterials über das Niveau der Hauptausdehnungsrichtung werden dadurch vermieden. Durch die erfindungsgemässe Ausbildung der Werkzeugform kann auf die Verwendung von Schiebern verzichtet werden.

Die Finger werden vorzugsweise in ihren Dimensionen so bestimmt, dass sie wesentlich länger als breit sind. Die Abstände zwischen den Fingern werden dabei so gewählt, dass - entsprechend der Stabilität bzw. Verformbarkeit des Decormaterials - dieses Decormaterial weder beim Hinterspritzen und/oder Hinterpressen noch beim fertiggestellten Produkt durch Aufbiegen oder Verformen das obere Niveau der Finger bzw. des Bordes erreichen kann. Ein solches, einstückig an das Decormaterial angeformtes Bord weist eine stark gegliederte Längsstruktur auf, wodurch eine gute Flexibilität der Einfassung erreicht wird.

In bevorzugten Varianten des Verfahrens können Finger an der Ober- und Unterseite des Bordes vorgesehen werden. Weist das Decormaterial zudem eine genügende Stabilität auf (ist es beispielsweise ein strapazierfähiger Teppich), so kann die Höhe des Bordes auf die Dicke des Teppichs reduziert werden; die angeformten Finger über- und untergreifen dann den Teppich. Wahlweise werden dabei die oberen Finger so ausgebildet, dass der sich nach dem Hinterpressen und/oder Hinterspritzen wieder aufrichtende Flor des Teppichs das obere Niveau der Finger bzw. des Bordes nicht oder gerade erreicht bzw. überragt. Des weiteren können diese Finger in am Bord angeformte Rippen übergehen bzw. die an der Aussenseite des Bordes angeformten Rippen können sich in den Fingern fortsetzen. Dies hat den Vorteil, dass das Bord noch dünner ausgebildet werden kann und trotzdem der Rand des Decormaterials zuverlässig verstärkt und eingefasst ist.

In bevorzugten Ausführungsformen der Erfindung kann vorgesehen sein, dass die beiden Formhälften in einer geraden Bewegung geschlossen bzw. geöffnet werden können. Dies erlaubt, die Produktionszeit der Einfassung eines Decormaterials wesentlich zu verkürzen.

Die Erfindung wird im folgenden anhand von in den Figuren schematisch dargestellten Ausführungsbeispielen näher erläutert; es zeigen:
- Fig. 1: Schnittdarstellungen von Werkzeugformen zur Herstellung der Einfassung des Randes eines Decormaterials;
- Fig. 2: Schnittdarstellungen von Einfassungen des Randes eines Decormaterials;
- Fig. 3: Schnittdarstellungen von Einfassungen des Randes eines Decormaterials, welche ein Bord mit reduzierter Dicke aufweisen;
- Fig. 4: Ausgewählte Draufsichten auf Einfassungen des Randes eines Decormaterials nach Fig. 2 und 3;
- Fig. 5: Schnittdarstellungen von Einfassungen des Randes eines Decormaterials, als Verbindung zu einem weiteren Decormaterial oder einem Einsatz; und
- Fig. 6: Schnittdarstellungen und Draufsichten von Einfassungen des Randes eines Decormaterials, gemäss einer weiteren Ausführungsform.

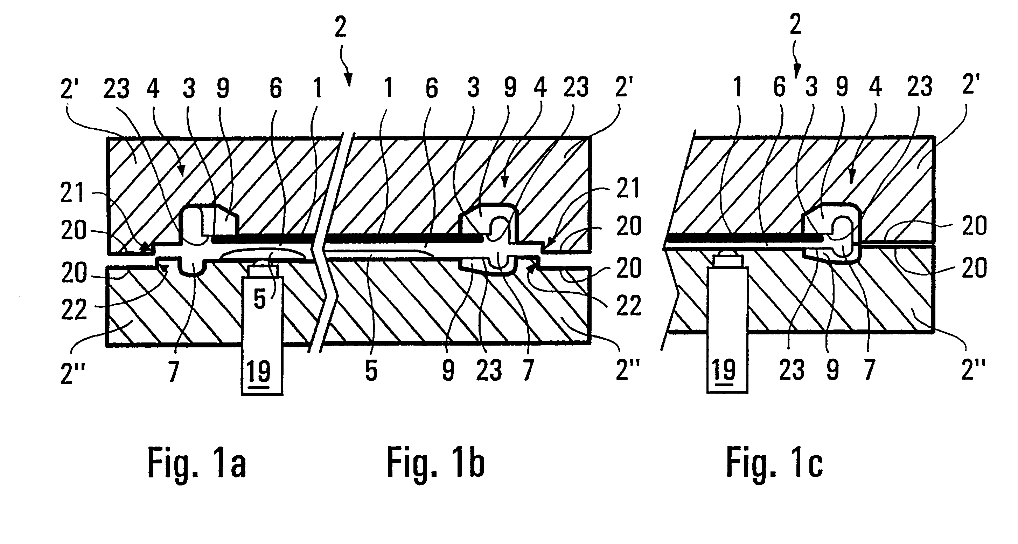

Die in Fig. 1a) dargestellte erste Ausführungsform einer Werkzeugform 2 zum kombinierten Hinterpressen-Hinterspritzen ist Bestandteil einer sonst nicht weiter gezeigten Maschine und zur Herstellung von Einfassungen 4 eines Decormaterials 1 mittels des Quellfluss-Verfahrens eingerichtet. Das etwas geöffnete, als Vertikalschliesseinheit ausgebildete Werkzeug weist ein Werkzeugoberteil 2' auf, das einem Werkzeugunterteil 2'' so gegenüberliegt, dass ihre Trennfuge im wesentlichen horizontal verläuft. Ausserdem umfasst das Werkzeug 2 mindestens einen Heizkanal, eine Heiz-/Kühlvorrichtung eine Angussbuchse, ein Ausstosswerkzeug und eine Steuerung, welche alle nicht dargestellt sind.

Das Werkzeugoberteil 2' ist an dessen Unterseite so ausgebildet, dass es die negative Kontur einer damit herzustellenden Einfassung 4 eines Decormaterials 1 bzw. dessen Rändern 3 aufweist. Aussparungen für ein Bord 7 und Finger 9 sind ersichtlich, wobei die Aussparungen für die Finger 9 durch Haltestege 23 voneinander getrennt sind. Die Haltestege 23 erstrecken sich bis zum auszubildenden Bord 7. Die an dem Werkzeugoberteil 2' ausgebildete Kontur verläuft im wesentlichen horizontal. An den Randbereichen weist das Werkzeugoberteil 2' horizontale Auflagebereiche 20 und eine umlaufende Tauchkante 21 auf. In Fig. la, in den horizontalen Bereichen, ist das Werkzeugoberteil 2' mit einer nicht dargestellten Halteeinrichtung versehen. Es handelt sich dabei vorzugsweise um mehrere Unterdruckdüsen, die gleichmässig verteilt sind und das eingelegte Decormaterial 1 in Position halten.

An dem Werkzeugunterteil 2'' ist an dessen Oberseite der untere Teil der Werkzeugform 2 ausgebildet, die im wesentlichen horizontal verläuft. An den Randbereichen weist sie ebenfalls horizontale Auflagebereiche 20 und eine, der umlaufenden Tauchkante 21 gegenüberliegende Kante 22 auf. Das Werkzeugoberteil 2' bildet bei Auflage auf dem Werkzeugunterteil 2'' mit diesem eine Kavität 6, die eine Kontur aufweist, die der herzustellenden Einfassung 4 eines Decormaterials 1 entspricht. In diese Kavität 6 münden als vertikal ausgerichtete Nadelverschlussdüsen 19 ausgebildete Zuleitungen. Durch den nicht dargestellten, in seiner Temperatur steuerbaren Heizkanal gelangt die plastifizierte, auf einer vorgegebenen Temperatur gehaltene Kunststoffmasse 5 in die Nadelverschlussdüsen 19 und die Kavität 6.

Die in Fig. 1b) dargestellte zweite Ausführungsform einer Werkzeugform 2 zum Hinterpressen ist Bestandteil einer sonst ebenfalls nicht weiter gezeigten Maschine und zur Herstellung von Einfassungen 4 eines Decormaterials 1 mittels des Strangablege-Verfahrens eingerichtet. Im Gegensatz zu Fig. 1a) ist hier die Werkzeugform 2 so ausgebildet, dass damit Einfassungen 4 hergestellt werden können, die ein dünneres Bord 7 und sowohl untere als auch obere Finger 9 umfassen, welche jeweils durch Haltestege 23 voneinander getrennt sind.

In einer dritten, in Fig. 1c) dargestellten Ausführungsform des erfindungsgemässen Verfahrens wird die Kunststoffmaterialschmelze in eine komplett geschlossene Werkzeugform eingespritzt (Hinterspritzen), weshalb beim Werkzeug auf die Ausbildung von Tauchkanten verzichtet werden kann. Zudem kann die Kavität, welche durch die beiden Werkzeughälften gebildet wird, eine bezüglich der Horizontalen beliebige Lage einnehmen. Wie in Fig. 1b) ist hier die Werkzeugform 2 so ausgebildet, dass damit Einfassungen 4 hergestellt werden können, die ein dünneres Bord 7 und sowohl untere als auch obere Finger 9 umfassen, welche jeweils durch Haltestege 23 voneinander getrennt sind. Andere fliessfähige oder pastöse, gegebenenfalls aus mehreren Komponenten bestehende, Massen 5 können ebenfalls eingespritzt und zumindest zu einer teilweisen Verfestigung oder einem teilweisen Erstarren gebracht werden.

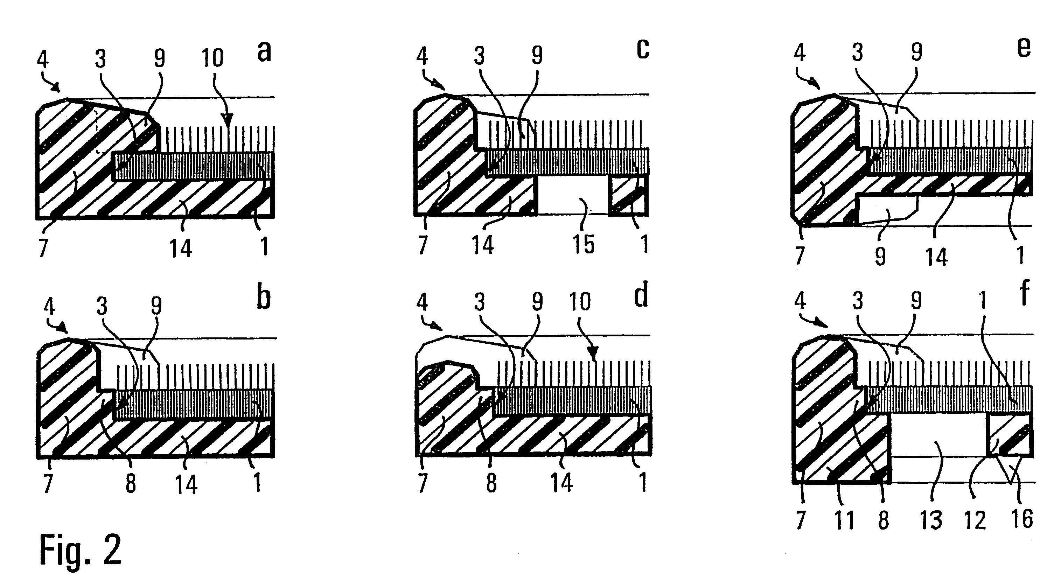

In Fig. 2 sind bevorzugte Ausführungsformen von Einfassungen von Decormaterial dargestellt. Fig. 2a) zeigt einen zur Hauptausdehnungsrichtung des Decormaterials senkrechten Schnitt durch den eingefassten Rand 3 desselben. Der Schnitt verläuft dabei durch einen Finger 9, welcher das Decormaterial 1 übergreift. Dieser Finger ist einem Bord 7 angeformt, welches im wesentlichen senkrecht zur Hauptausdehnungsrichtung des Decormaterials 1 steht. Der Flor des Decormaterials 1 hat sich nach dem Entformen wieder aufgerichtet, trotzdem überragt hier der Finger 9 das Niveau 10 des Decormaterials. Unter dem Decormaterial 1 wurde gleichzeitig mit dem Ausbilden des Bordes 7 und der Finger 9 eine Tragplatte 14 angeformt und mit dem Decormaterial verbunden. In Fig. 2b) verläuft der Schnitt parallel zum jenem in Fig. 2a), mit dem Unterschied, dass er nur durch das Bord 7 der gleichen Ausführungsform einer Einfassung 4 und nicht durch einen Finger 9 gelegt ist. Ein Finger 9 ist in der Ansicht dargestellt. Zwischen dem Bord 7 und dem Decormaterial 1, welchem das Bord 7 angeformt ist, erkennt man eine mit Kunststoffmaterial gefüllte Ausgleichszone 8. Durch diese Ausgleichszone werden Toleranzen des Decormaterials im Bereich des übergreifens der Finger 9 aufgefangen. Zwischen den vielen Fingern entstehen Nischen, welche wie Schattenfugen, aber im wesentlichen rechtwinklig zum Rand des Decormaterials verlaufend, diese Ausgleichszone kaschieren.

Die in den Fig. 2c) bis 2f) dargestellten Varianten der erfindungsgemässen Einfassung 4 eines Decormaterials 1 unterscheiden sich von den bisher besprochenen durch die Ausbildung bzw. das Aussparen von Öffnungen 15 in der Tragplatte 14 und eines Bordes 7, welches die Finger 9 überragt (Fig. 2c); durch ein Bord 7, welches von den Fingern 9 übergriffen wird und beispielsweise gerade das Niveau 10 des Decormaterials 1 erreicht (Fig. 2d); durch zusätzliches Ausbilden von Fingern 9, welche eine dünnere Tragplatte 14 untergreifen (Fig. 2e) und einen dem Bord 7 angeformten Steg 11, welcher durch ein Traggitter 13 für das Decormaterial 1 bildende Stäbe 12 verbunden ist (Fig. 2f) und dieses Decormaterial untergreift. Zusätzlich können dem Steg 11, dem Traggitter 13 bzw. der Tragplatte 14 - vorzugsweise an deren Unterseite - Noppen 16 angeformt sein, welche das Verrutschen eines als Auflegeteppich oder Fussmatte verwendeten, eingefassten Decormaterials verhindern.

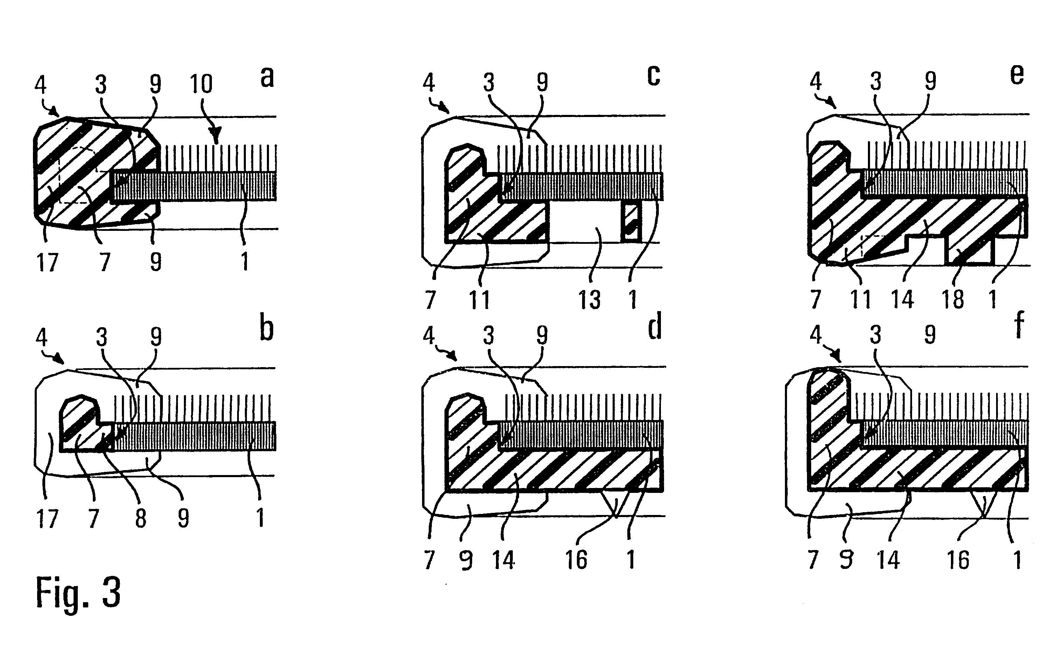

In Fig. 3 sind ebenfalls bevorzugte Ausführungsformen von Einfassungen von Decormaterial dargestellt. Fig. 3a) zeigt einen zur Hauptausdehnungsrichtung des Decormaterials 1 senkrechten Schnitt durch den eingefassten Rand 3 desselben. Der Schnitt verläuft dabei durch zwei Finger 9, welche das Decormaterial 1 über- bzw. untergreifen. Diese Finger sind einem Bord 7 (gestrichelt) angeformt, welches im wesentlichen senkrecht zur Hauptausdehnungsrichtung des Decormaterials 1 steht und gerade die gleiche Höhe wie das Decormaterial aufweist. Der Flor des Decormaterials hat sich nach dem Entformen wieder aufgerichtet, trotzdem überragt der Finger 9 das Niveau 10 des Decormaterials. Gleichzeitig mit dem Ausbilden des Bordes 7 und der Finger 9 wurden an dessen Aussenseite Rippen 17 angeformt und mit den Fingern 9 verbunden. Durch das Anformen dieser Rippen kann der Querschnitt des Bordes 7 reduziert werden, was zu einer erhöhten Flexibilität der Einfassung 4 beiträgt, ohne dass die Schutzwirkung für den Rand 3 des Decormaterials 1 beeinträchtigt wird. In Fig. 3b) verläuft der Schnitt parallel zu jenem in Fig. 3a), mit dem Unterschied, dass er nur durch das Bord 7 der gleichen Ausführungsform einer Einfassung 4 und nicht durch die Finger 9 gelegt ist. Zwei Finger 9 und eine Rippe 17 sind in der Ansicht dargestellt. Zwischen dem Bord 7 und dem Decormaterial 1, welchem das Bord 7 angeformt ist, erkennt man eine mit Kunststoffmaterial gefüllte Ausgleichszone 8. Durch diese Ausgleichszone werden Toleranzen des Decormaterials im Bereich des Übergreifens der Finger 9 aufgefangen. Zwischen den vielen Fingern entstehen Nischen, welche wie Schattenfugen diese Ausgleichszone kaschieren. Die in den Fig. 3a) und 3b) dargestellte Ausführungsform umfasst eine extrem flexible Einfassung 4 des Randes 3 des Decormaterials 1. Derart eingefasste Decormaterialien sind speziell geeignet für die Auskleidung bzw. Belegung von Flächen, die viele Unebenheiten aufweisen. Andererseits kann ein steiferes, strapazierfähigeres Decormaterial wie ein Teppich sicher und doch platzsparend eingefasst werden, ohne dass ein Traggitter oder eine Tragplatte angeformt werden muss.

Die in den Fig. 3c) bis 3f) dargestellten Varianten der erfindungsgemässen Einfassung 4 eines Decormaterials 1 unterscheiden sich von den bisher besprochenen durch die Ausbildung eines Steges 11 und eines Traggitters 13, welches zumindest Bereiche dieses, das Decormaterial umgreifenden Steges miteinander verbindet und dem Decormaterial 1 bzw. dem Bord 7 angeformt ist (Fig. 3c); durch die Ausbildung einer, ebenfalls dem Bord 7 angeformten, Tragplatte 14 mit oder ohne Öffnungen 15 (Fig. 3d), welche zumindest Bereiche des Steges 11 miteinander verbinden kann; durch zusätzliches Ausbilden von Leisten 18, welche die Tragplatte 14 zusätzlich stabilisieren (Fig. 3e) und durch ein Bord 7, das die gleiche Höhe wie die Finger 9 erreicht (Fig. 3f) bzw. diese sogar überragt. Die Finger 9 können auch in alternierender Reihenfolge an der Ober- und Unterseite des Bordes angeformt sein, damit sie abwechslungsweise das Decormaterial 1 unter-bzw. übergreifen (Fig. 3e,f). Finger 9 können an der Unterseite des Bordes 7, des Steges 11 bzw. der Tragplatte 14 so angeordnet sein, dass sie das Decormaterial 1 bzw. die Tragplatte 14 untergreifen. Zusätzlich können dem Traggitter 13 bzw. der Tragplatte 14 - vorzugsweise an deren Unterseite - Noppen 16 angeformt sein, welche das Verrutschen eines als Auflegeteppich oder Fussmatte verwendeten, eingefassten Decormaterials verhindern.

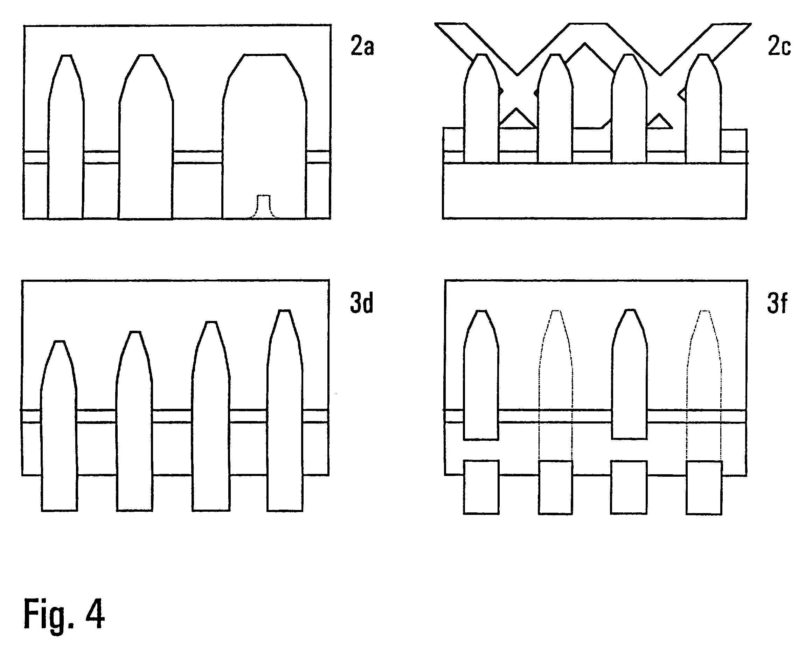

Fig. 4 veranschaulicht verschiedene, z.T. schon beschriebene Ausführungsformen der erfindungsgemässen Einfassung 4 von Decormaterial 1; die einzelnen Draufsichten von Ausschnitten einer geraden Einfassung sind mit den entsprechenden Figuren bezeichnet. Selbstverständlich umfasst die Erfindung auch Einfassungen, welche gebogen oder abgewinkelt hergestellt werden.

Wie das Bord 7 und die Finger 9 können auch die weiteren Elemente der Einfassung 4, z.B. der Steg 11, die Stäbe 12 des Traggitters 13 bzw. die Tragplatte 14 in einem Arbeitsgang einstückig hergestellt und mit dem Decormaterial verbunden werden. Beliebige Kombinationen der in den Figuren dargestellten bzw. beschriebenen Merkmale gehören ebenfalls zum Umfang der vorliegenden Erfindung. Die Breite bzw. Länge der Finger kann, wie in Fig. 4 beispielhaft dargestellt, sowohl im Hinblick auf verschiedene Einfassungen als auch innerhalb derselben Einfassung variieren. Eine schrittweise oder kontinuierliche Verminderung bzw. Vergrösserung der Fingerbreite bzw. -Länge kann in solchen Fällen vorgesehen werden. Bei der Ausbildung von breiteren Fingern (vergl. Fig. 4: 2a) können Einschnitte vorgesehen werden. Diese verlaufen vorzugsweise senkrecht zur Hauptausdehnungsrichtung des Decormaterials und erhöhen die Flexibilität des Bordes 7 bzw. der Einfassung. Auch können die Finger 9 mindestens an Teilen - z.B. an ihren Enden bzw. Übergängen zum Bord - abgerundet ausgebildet sein.

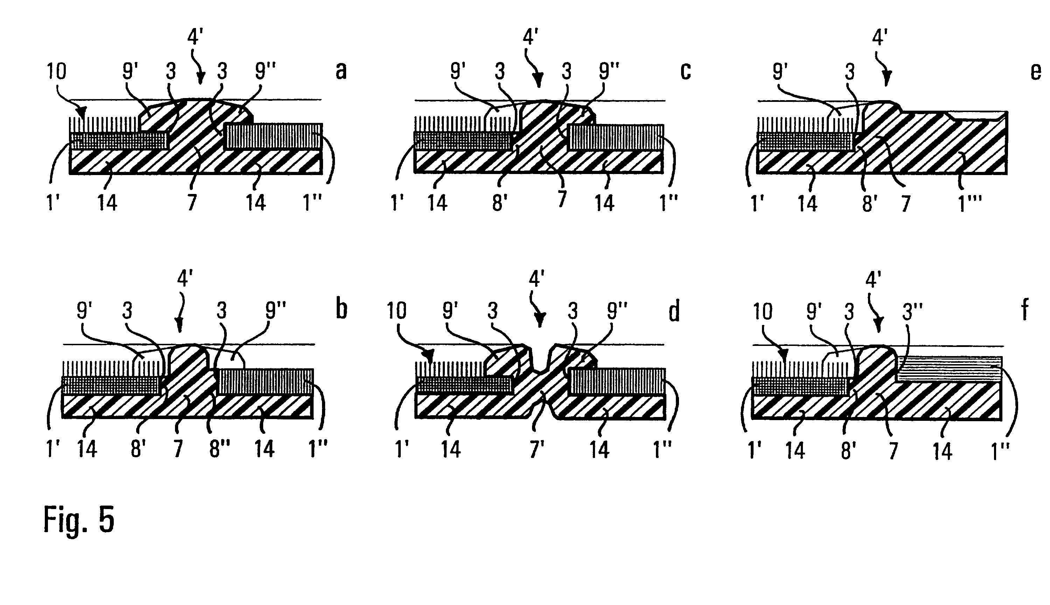

In Fig. 5 sind weitere bevorzugte Ausführungsformen von Einfassungen von Decormaterial dargestellt. Fig. 5a) zeigt eine doppelte Einfassung 4' von zwei Decormaterialien 1' und 1'', welche nicht ganz zusammenstossen, weil sie durch ein senkrecht zur Hauptausdehnungsrichtung der beiden Decormaterialien verlaufendes Bord 7' getrennt sind. Beidseits des Bordes 7' können gleichartige oder aber verschiedene Decormaterialien angeordnet sein. Der Schnitt verläuft hier durch einen Doppelfinger 9', welcher das Decormaterial 1' und das Decormaterial 1'' übergreift. Dieser Doppelfinger ist dem Bord 7' angeformt. Der Flor des Decormaterials 1' hat sich nach dem Entformen wieder aufgerichtet, trotzdem überragt hier der Finger 9' das Niveau 10 des Decormaterials. Das Decormaterial 1'' kann, wie dargestellt, auch ohne Flor ausgebildet sein und vom Finger 9'' überragt werden. Unter den Decormaterialien wurde gleichzeitig mit dem Ausbilden des Bordes 7' und der Finger 9', 9'' eine Tragplatte 14 angeformt und mit den Decormaterialien verbunden.

In Fig. 5b) verläuft der Schnitt parallel zum jenem in Fig. 5a), mit dem Unterschied, dass er nur durch das Bord 7' der gleichen Ausführungsform einer Einfassung 4' und nicht durch einen Finger 9', 9'' gelegt ist. Ein Finger 9', 9'' ist in der Ansicht dargestellt. Zwischen dem Bord 7' und den Decormaterialien 1' und 1'', welchen das Bord 7' angeformt ist, erkennt man je eine mit Kunststoffmaterial gefüllte Ausgleichszone 8', 8''. Durch diese Ausgleichszonen werden Toleranzen des Decormaterials im Bereich des Übergreifens der Finger 9', 9'' aufgefangen. Zwischen den vielen Fingern entstehen Nischen, welche wie Schattenfugen, aber im wesentlichen rechtwinklig zum Rand des Decormaterials verlaufend, diese Ausgleichszone kaschieren.

Die in den Fig. 5c) bis 5f) dargestellten Varianten der erfindungsgemässen Einfassung 4' von Decormaterialien 1', 1'' unterscheiden sich von den bisher besprochenen durch die Ausbildung von alternierend dem Bord 7' angeformten Fingern 9', 9'' (Fig. 5c); durch wahlweise ein- oder zweiseitige Verengungen im Bord 7', wodurch eine flexible Verbindung zwischen den Decormaterialien 1' und 1'' bzw. dem Einsatz 1''' hergestellt wird (Fig. 5d); durch einseitiges Anformen eines Einsatzes 1''' an das Bord 7', wobei dieser Einsatz das gleiche Material wie das Bord 7' umfasst und seine Oberfläche reliefartig, beispielsweise in der Form eines Signetes oder Logos, strukturiert sein kann (Fig. 5e); und durch die Wahl eines extrem stabilen Decormaterials 1'', dessen Rand 3'' stumpf und ohne Ausbildung von Fingern an das Bord 7' stossen kann (Fig. 5f). Einsätze 1''' können sich sowohl in der Hauptausdehnungsrichtung eines Decormaterials am Rand als auch im Inneren desselben befinden, so dass der Einsatz ganz oder teilweise von Decormaterial umgeben ist.

In Figur 6 sind weitere Ausführungsformen der erfindungsgemässen Einfassung 4 von Decormaterial dargestellt. Kennzeichen dieser Ausführungsform ist das Ausbilden von sehr dünnen Fingern 9, welche einseitig oder beidseitig das Decormaterial unter- bzw. übergreifen und von denen zumindest ein Teil - vorzugsweise im Bereich ihrer Spitzen - mit den Spitzen der benachbarten Finger 9 über einen Quersteg 24 verbunden sind.

Dabei zeigt Fig. 6a einen Querschnitt durch und Fig. 6d eine Draufsicht auf eine Verbindung von zwei etwa gleich starken, flächigen Decormaterialien 1, wie Leder, Stoff und dergleichen. Die Ränder 3 der Decormaterialien 1 werden durch ein Bord 7 voneinander getrennt und vollständig umfasst. Das Bord 7 kann jeweils zwischen den Fingern 9 niedriger sein (nur teilweise gezeigt, siehe die mit einem Stern bezeichneten Bereiche zwischen den gepunkteten Linien in Fig. 6d), was eine zusätzliche Verbesserung der Flexibilität der Einfassung 4 der Decormaterialien 1 bewirkt. Die Einformungen 25 zwischen dem Bord 7, den Fingern 9 und dem Quersteg 24 können bis zur Oberfläche des Decormaterials 1 offen sein (wie gezeigt) oder teilweise so gefüllt sein, dass sie nicht ganz bis zum Decormaterial 1 hinunter bzw. hinauf reichen.

Fig. 6b zeigt einen Querschnitt und Fig. 6e eine Draufsicht auf eine Einlage 26 aus Kunststoffmasse 5, welche direkt an ein Bord 7 anschliesst. Das Bord 7 ist über Finger 9 mit dem Decormaterial 1 verbunden. Das Decormaterial, das z.B. ein Teppich, ein textiler Stoff, Leder oder eine Folie sein kann, ist mit einer Tragplatte 14 unterlegt. Während die Tragplatte 14 die Finger 9 an der Unterseite verbindet, sind an der Oberseite die einzelnen Finger mit einem Quersteg 24 verbunden. Die Einlage 26 kann (wie gezeigt) an ihrer Unterseite etwas abgesetzt oder aber auf gleichem Niveau wie die Tragplatte 14 vorgesehen sein. Der Rand 3 des Decormaterials stösst an das Bord 7 und wird von diesem ganz eingefasst. Die Einformungen 25 zwischen dem Bord 7, den Fingern 9 und dem Quersteg 24 können bis zur Oberfläche des Decormaterials 1 offen sein (wie gezeigt) oder teilweise so gefüllt sein, dass sie nicht ganz bis zum Decormaterial 1 hinunter bzw. hinauf reichen.

Fig. 6c zeigt einen Querschnitt und Fig. 6f eine Draufsicht auf eine Verbindung von zwei gleichen oder verschiedenen Decormaterialien 1 aus z.B. Teppich, Stoff, Leder oder Folie.

Die Verbindung besteht aus einem Bord 7, welcher die Ränder 3 der Decormaterialien 1 umfasst und welcher über Finger 9 mit dem Decormaterial 1 verbunden ist. Das Decormaterial ist mit einer Tragplatte 14 aus Kunststoff unterlegt. Während die Tragplatte 14 die Finger 9 an der Unterseite verbindet, sind an der Oberseite die einzelnen Finger 9 mit einem Quersteg 24 verbunden. Die Einformungen 25 zwischen dem Bord 7, den Fingern 9 und dem Quersteg 24 können bis zur Oberfläche des Decormaterials 1 offen sein (wie gezeigt) oder teilweise so gefüllt sein, dass sie nicht ganz bis zum Decormaterial 1 hinunter bzw. hinauf reichen.

Weitere erfindungsgemässe Ausführungsformen umfassen sämtliche beschriebenen bzw. in den Figuren dargestellten Merkmale und alle weiteren möglichen Kombinationen derselben.

Zur Herstellung einer Einfassung 4, 4' eines Decormaterials 1, gemäss einer ersten Ausführungsform, wird zuerst ein bereits der gewünschten Kontur entsprechend vorgeformtes Decormaterial 1 in die Kavität 6 eingebracht. Dabei können beispielsweise Unterdruckdüsen das Decormaterial 1 am Werkzeugoberteil 2' halten. Die Decorschicht 2 ist so bemessen, dass sie bereits die Sollgrösse aufweist. Anschliessend wird das Werkzeugoberteil 2' durch eine vertikale Bewegung auf das Werkzeugunterteil 2'' zubewegt, bis die beiden Werkzeughälften, wie in Fig. 1a) dargestellt, relativ nahe zueinander positioniert sind. Danach werden die Nadelverschlussdüsen 19 des Hinterpresswerkzeuges der Werkzeugform 2 so lange geöffnet, bis eine vorbestimmte Menge plastifizierter Kunststoffmaterialschmelze 5 in die Kavität 6 eingeflossen ist. Nachfolgend werden die ebenfalls in die Kavität 6 mündenden (nicht dargestellten) weiteren Nadelverschlussdüsen, nacheinander geöffnet. In der Darstellung von Fig. 1 sind diese Verfahrensschritte bereits durchgeführt. Das Einbringen der Kunststoffmasse 5 geschieht mit einem relativ niedrigen Druck, so dass diese im Bereich der Nadelverschlussdüsen auf dem Werkzeugunterteil 2'' liegen bleibt, ohne bereits mit dem Decormaterial 1 in Kontakt zu kommen. Danach wird die Werkzeugform 2 durch eine weitere vertikale Bewegung des Werkzeugoberteils 2' komplett geschlossen. Dadurch drückt nun das Werkzeugoberteil 2' über das Decormaterial 1 auf die Kunststoffmasse 5, wodurch letztgenannte verdrängt wird und sich gleichmässig in der Kavität 6 verteilt. Bereits während dieser Verdräng-Press-Bewegung schliesst die Tauchkante 21 des Werkzeugoberteils 2' zusammen mit der ihr gegenüberliegenden Kante 22 des Werkzeugunterteils 2'' die Werkzeugform 2. Die Abmessungen der Tauchkante 21 sind so auf diejenigen der Kante 22 abgestimmt, dass die Werkzeugform 2 solange zur Entlüftung offen bleibt, bis sich durch das Verdrängpressen die Kunststoffmasse 5 im Bereich der Tauchkante 21 befindet, aber noch nicht ausgetreten ist.

Nach dem Abwarten einer Stand- bzw. Kühlzeit zum Erreichen eines zumindest teilweisen Kristallisations- oder Erstarrungsvorganges werden die Werkzeughälften auseinanderbewegt, dadurch das Werkzeug 2 wieder geöffnet und das fertige eingefasste Decormaterial 1 durch an dem Werkzeugunterteil 2'' angeordnete, nicht dargestellte Ausstosser ausgestossen. Um ein nachträgliches und unerwünschtes Schwinden des durch Hinterpressen und/oder Hinterspritzen mit dem Decormaterial verbundenen Kunststoffmaterials gegenüber dem Decormaterial zu verhindern, kann die Werkzeugform 2 und das eingelegte Decormaterial 1 vorgängig mittels einer nicht dargestellten Heizung vorgewärmt und damit entsprechend vorgedehnt werden.

In dieser Beschreibung einer beispielhaften Herstellung einer einstückigen Einfassung 4, 4' eines Decormaterials 1 im Werkzeug 2 können die mit Werkzeugoberteil 2' bzw. Werkzeugunterteil 2'' bezeichneten Werkzeugteile gegeneinander vertauscht sein, so dass das Werkzeugunterteil 2'' das Decormaterial vor dem Hinterpress- bzw. Hinterspritzvorgang aufnimmt und beispielsweise die Ausstosser im Werkzeugoberteil 2' angeordnet sind.

Gemäss einer zweiten bevorzugten Ausführungsform der Erfindung (siehe Fig. 1b) ist die Werkzeugform 2 ohne Nadelverschlussdüsen 19 ausgebildet. Die Kunststoffmasse bzw. die Kunststoffmaterialschmelze 5 kann dann beispielsweise mit einer beweglichen Breitschlitzdüse nach dem Strangablege-Verfahren in die Kavität 6 zwischen die Werkzeugteile 2' und 2'' gebracht werden. Danach wird die Werkzeugform 2 durch eine weitere vertikale Bewegung des Werkzeugoberteils 2' komplett geschlossen. Dadurch drückt nun das Werkzeugoberteil 2' über das Decormaterial 1 auf die Kunststoffmasse 5, wodurch letztgenannte verdrängt wird und sich gleichmässig in der Kavität 6 verteilt. Bereits während dieser Verdräng-Press-Bewegung schliesst die Tauchkante 21 des Werkzeugoberteils 2' zusammen mit der ihr gegenüberliegenden Kante 22 des Werkzeugunterteils 2'' die Werkzeugform 2. Die Abmessungen der Tauchkante 21 sind so auf diejenigen der Kante 22 abgestimmt, dass die Werkzeugform 2 so lange zur Entlüftung offen bleibt, bis sich durch das Verdrängpressen die Kunststoffmasse 5 im Bereich der Tauchkante 21 befindet, aber noch nicht ausgetreten ist.

Bei einer dritten bevorzugten Ausführungsform (siehe Fig. 1c) des erfindungsgemässen Verfahrens wird die Werkzeugform 2 komplett geschlossen, bevor die Kunststoffmaterialschmelze 5 in die Kavität 6 eingespritzt wird. Aus diesem Grunde kann bei der Werkzeugform auf die Ausbildung einer Tauchkante 21 bzw. der dieser gegenüberliegenden Kante 22 verzichtet werden.

Als anwendbare Prozesse für das einstückige Herstellen der erfindungsgemässen Einfassungen 4, 4' von Decormaterial 1 kommen vorzugsweise das Hinterspritzen bzw. Hinterpressen nach dem Quellfluss- oder Strangablege-Verfahren oder beliebige Kombinationen dieser Prozesse in Betracht. Selbstverständlich sind die dargestellten Einfassungen nur Beispiele und können im Rahmen der Erfindung beliebig verändert und den jeweils anderen Herstellungsverfahren zugeordnet werden.

Als Materialien kommen alle für ein kombiniertes Hinterpress-Hinterspritzverfahren geeigneten Kunststoffe, also Thermoplaste bzw. dauerelastische Polymere wie z.B. Polypropylen, ABS-Copolymer (Acrylnitril-Butadien-Styrol-Copolymer) oder thermoplastische Kautschuke etc. in Frage. Diese Kunststoffe können auch beispielsweise mit Fasern oder Matten verstärkt sein. Dabei werden oft auch verschiedenfarbige Decormaterialien und/oder Kunststoffe mit unterschiedlicher Textur verwendet. In Abweichung von den beschriebenen Verfahren und Materialien können auch andere fliessfähige oder pastöse Massen 5 für die Herstellung der erfindungsgemässen Einfassungen verwendet werden.

Als Anwendungsbeispiele sollen - stellvertretend und keinesfalls abschliessend - genannt werden:
- Ausstattungs- bzw. Verkleidungselemente in Verkehrsmitteln (z.B. in Autos, Bussen, Trams, Eisenbahnen, Schiffen oder Flugzeugen): Dabei können die erfindungsgemässen Einfassungen 4 von Decormaterial als Auflegeteppiche oder Verkleidungsteile in Transportfahrzeugen bzw. als bewegliche, klappbare Abdeckungen eines Kofferraums oder als ebensolche Kofferraumbodenauskleidung vorgesehen sein.
- Verkleidungs- bzw. Einrichtungsbauteile in Häusern (z.B. in Badezimmern, Möbeln bzw. Sitzmöbeln, Läden, Ausstellungsausrüstungen): Dabei kann das erfindungsgemäss eingefasste Decormaterial Serviceöffnungen in Badewannenschürzen oder Duschentassen ebenso abdecken wie Sicherungs- oder Verteilerkästen von elektrischen Anlagen in Wohnungen oder Ausstellungseinrichtungen. Auch die Verwendung als Badezimmerteppiche oder Fussmatten ist denkbar.
- Ausstattungs- bzw. Verkleidungselemente in Transportmitteln (z.B. in Koffern für Reisegepäck, Akten oder Instrumente): Dabei können die erfindungsgemäss eingefassten Decormaterialien Behältnisse in der Kofferschale oder in Zwischenwänden ebenso abdecken wie Adress- und andere Fächer.

## Patentansprüche

1. Verfahren zum Einfassen von Decormaterial (1), insbesondere eines Teppichs, eines Gewebes bzw. einer Folie, bei welchem in einer Werkzeugform (2) zum Hinterpressen und/ oder Hinterspritzen zumindest an Teilen eines Randes (3) dieses Decormaterials (1) eine Einfassung (4) ausgebildet wird, welches folgende Schritte umfasst:
• Einlegen von Decormaterial (1) in eine von Werkzeughälften (2', 2'') gebildete Kavität (6) der Werkzeugform (2);
• Einbringen einer fliessfähigen Masse (5) in die Kavität (6);
• Schliessen der Werkzeugform (2);
• Verteilen der fliessfähigen Masse (5) in der Kavität (6);
• Ausstossen des eingefassten Decormaterials (1) nach zumindest teilweisem Erstarren der Masse;
**gekennzeichnet durch** die folgenden Schritte:
• Einstückige Ausbildung eines Bordes (7), welches sich im wesentlichen rechtwinklig zur Hauptausdehnungsrichtung und entlang des Randes (3) dieses Decormaterials (1) erstreckt, sowie einer Vielzahl von Fingern (9), welche das Decormaterial (1) übergreifen;
• Verbinden des Bordes (7) und der Finger (9) mit dem Decormaterial (1).

2. Verfahren nach Anspruch 1, **dadurch gekennzeichnet, dass** das Bord (7) so gefertigt wird, dass es das Niveau (10) der Hauptausdehnungsrichtung des Decormaterials (1) überragt.

3. Verfahren nach Anspruch 1 oder 2, **gekennzeichnet durch** ein Anformen eines das Decormaterial (1) untergreifenden Steges (11) an der Unterseite des Bordes (7).

4. Verfahren nach Anspruch 3, **dadurch gekennzeichnet, dass** die Stege (11) zumindest bereichsweise mit Stäben (12) verbunden werden, welche ein Traggitter (13) für das Decormaterial (1) bilden.

5. Verfahren nach Anspruch 3, **dadurch gekennzeichnet, dass** die Stege (11) zumindest bereichsweise mit einer Tragplatte (14) für das Decormaterial (1) verbunden werden.

6. Verfahren nach Anspruch 5, **dadurch gekennzeichnet, dass** in der Tragplatte (14) Öffnungen (15) ausgespart werden.

7. Verfahren nach einem der Ansprüche 4 bis 6, **dadurch gekennzeichnet, dass** an der Unterseite des Traggitters (13) bzw. der Tragplatte (14) Noppen (16) angeformt werden.

8. Verfahren nach einem der vorhergehenden Ansprüche, **dadurch gekennzeichnet, dass** an der Unterseite des Bordes (7), des Steges (11) bzw. der Tragplatte (14) ebenfalls Finger (9) angeformt werden, welche das Decormaterial (1) bzw. die Tragplatte (14) untergreifen.

9. Verfahren nach einem der vorhergehenden Ansprüche, **dadurch gekennzeichnet, dass** an der Aussenseite des Bordes (7) Rippen (17) angeformt werden, welche sich in den Fingern (9) fortsetzen.

10. Verfahren Anspruch 8 oder 9, **dadurch gekennzeichnet, dass** die Finger (9) an der Ober- und Unterseite des Bordes (7) in alternierender Reihenfolge angeformt werden.

11. Vorrichtung zum Einfassen von Decormaterial (1), insbesondere eines Teppichs, eines Gewebes bzw. einer Folie, welche eine Werkzeugform (2) zum Hinterpressen und/oder Hinterspritzen umfasst, mit der zumindest an Teilen des Randes (3) dieses Decormaterials (1) eine Einfassung (4) ausbildbar ist, **dadurch gekennzeichnet, dass** diese Werkzeugform (2) Aussparungen aufweist, welche zum Formen von Fingern (9) und damit zum Umfliessen mit einer Masse (5) und Einfassen des Randes (3) des Decormaterials (1) ausgebildet sind, und dass diese Werkzeugform (2) Haltestege (23) aufweist, durch welche die Aussparungen voneinander trennbar sind und mittels welchen das Decormaterial (1) - zur Verhinderung von Deformationen des Randes (3) - positionierbar ist, wobei diese Haltestege (23) bis an die Aussparung für ein Bord (7) reichen, welches sich im wesentlichen rechtwinklig zur Hauptausdehnungsrichtung und entlang des Randes (3) dieses Decormaterials (1) erstreckt und welches mit einer Vielzahl von Fingern (9), die das Decormaterial (1) über-und/oder untergreifen einstückig herstellbar und im gleichen Arbeitsgang mit dem Decormaterial (1) verbindbar ist.

12. Vorrichtung nach Anspruch 11, **dadurch gekennzeichnet, dass** die Werkzeugform (2) Mittel zum Anformen eines Steges (11), eines Traggitter (13) bzw. einer Tragplatte (14) an dieses Bord (7) umfasst.

13. Vorrichtung nach Anspruch 12, **dadurch gekennzeichnet, dass** die Werkzeugform (2) Mittel zum Anformen von Noppen (16) an den Steg (11), das Traggitter (13) bzw. die Tragplatte (14) umfasst.

14. Vorrichtung nach Anspruch 12, **dadurch gekennzeichnet, dass** die Werkzeugform (2) Mittel zum Anformen von Leisten (18) an die Tragplatte (14) umfasst.

15. Vorrichtung nach einem der Ansprüche 11 bis 14, **dadurch gekennzeichnet, dass** die Werkzeugform (2) Mittel zum Einfassen von gleichen oder unterschiedlichen Decormaterialien (1', 1'') beidseits eines Bordes 7' umfasst.

16. Vorrichtung nach einem der Ansprüche 11 bis 15, **dadurch gekennzeichnet, dass** die Werkzeugform (2) Mittel zum Einfassen eines Decormaterials (1') auf einer Seite eines Bordes 7' und zur Ausbildung eines Einsatzes (1''') auf der anderen Seite umfasst, wobei der Einsatz das gleiche Material wie das Bord (7') umfasst.

17. Vorrichtung nach einem der Ansprüche 11 bis 16, **dadurch gekennzeichnet, dass** die Werkzeugform (2) Mittel zum Ausbilden einer ein- oder zweiseitigen Verengung im Bord 7' umfasst, wodurch eine flexible Verbindung zwischen den Decormaterialien (1') und (1") bzw. dem Einsatz (1''') herstellbar ist.

18. Einfassung eines Decormaterials, insbesondere eines Teppichs, eines Gewebes bzw. einer Folie, welche in einer Werkzeugform (2) zum Hinterpressen und/oder Hinterspritzen zumindest an Teilen eines Randes (3) dieses Decormaterials (1) ausbildbar ist und ein Bord (7) umfasst, das sich im wesentlichen rechtwinklig zur Hauptausdehnungsrichtung und entlang zumindest eines Teiles des Randes (3) dieses Decormaterials (1) erstreckt, **gekennzeichnet durch** eine Vielzahl von an dieses Bord (7) angeformten Fingern (9) zur Ausbildung einer gegliederten, flexiblen Längsstruktur dieser Einfassung (4), wobei die Finger (9) das Decormaterial (1) über- und/oder untergreifen und mit dem Bord (7) einstückig herstellbar und im gleichen Arbeitsgang mit dem Decormaterial (1) verbindbar sind.

19. Einfassung eines Decormaterials nach Anspruch 18, **dadurch gekennzeichnet, dass** zumindest ein Teil der Finger (9) im Bereich ihrer Spitzen mit den Spitzen der benachbarten Finger über einen Quersteg (24) verbunden sind.

## Claims

1. Method for the bordering of decorative material (1), in particular a carpet, a fabric or a sheet, in which a border (4) is formed in a die mould (2) for back-pressing and/or back-injection, at least on parts of an edge (3) of this decorative material (1), which comprises the following steps:
• insertion of decorative material (1) into a cavity (6) of the die mould (2), the said cavity being formed by die halves (2', 2');
• introduction of a flowable mass (5) into the cavity (6);
• closing of the die mould (2);
• distribution of the flowable mass (5) in the cavity (6);
• ejection of the bordered decorative material (1) after the at least partial solidification of the mass;
characterized by the following steps:
• one-piece formation of a rim (7), which extends essentially at right angles to the main direction of extent and along the edge (3) of this decorative material (1), and of a multiplicity of fingers (9) which engage over the decorative material (1);
• connection of the rim (7) and of the fingers (9) to the decorative material (1).

2. Method according to Claim 1, characterized in that the rim (7) is produced in such a way that it projects above the level (10) of the main direction of extent of the decorative material (1) .

3. Method according to Claim 1 or 2, characterized by the integral forming of a web (11), engaging under the decorative material (1), on the underside of the rim (7).

4. Method according to Claim 3, characterized in that the webs (11) are connected, at least in regions, to bars (12) which form a supporting lattice (13) for the decorative material (1).

5. Method according to Claim 3, characterized in that the webs (11) are connected, at least in regions, to a supporting plate (14) for the decorative material (1).

6. Method according to Claim 5, characterized in that orifices (15) are recessed in the supporting plate (14).

7. Method according to one of Claims 4 to 6, characterized in that bosses (16) are integrally formed on the underside of the supporting lattice (13) or of the supporting plate (14).

8. Method according to one of the preceding claims, characterized in that fingers (9), which engage under the decorative material (1) or the supporting plate (14), are likewise integrally formed on the underside of the rim (7), of the web (11) or of the supporting plate (14).

9. Method according to one of the preceding claims, characterized in that ribs (17), which are continued in the fingers (9), are integrally formed on the outside of the rim (7).

10. Method according to Claim 8 or 9, characterized in that the fingers (9) are integrally formed in an alternating sequence on the top side and underside of the rim (7).

11. Device for the bordering of decorative material (1), in particular a carpet, a fabric or a sheet, which comprises a die mould (2) for back-pressing and/or back-injection, by means of which a border (4) can be formed at least on parts of the edge (3) of this decorative material (1), characterized in that this die mould (2) has recesses which are designed for the molding of fingers (9) and, consequently, for flow-round by a mass (5) and bordering the edge (3) of the decorative material (1), and in that this die mould (2) has holding webs (23), by which the recesses can be separated from one another and by means of which the decorative material (1) can be positioned, in order to prevent deformations of the edge (3), these holding webs (23) reaching as far as the recess for a rim (7) which extends essentially at right angles to the main direction of extent and along the edge (3) of this decorative material (1) and which can be produced in one piece with a multiplicity of fingers (9) engaging over and/or under the decorative material (1) and can be connected to the decorative material (1) in the same operation.

12. Device according to Claim 11, characterized in that the die mould (2) comprises means for integrally forming a web (11), a supporting lattice (13) or a supporting plate (14) onto this rim (7).

13. Device according to Claim 12, characterized in that the die mould (2) comprises means for integrally forming bosses (16) onto the web (11), the supporting lattice (13) or the supporting plate (14).

14. Device according to Claim 12, characterized in that the die mould (2) comprises means for integrally forming strips (18) onto the supporting plate (14).

15. Device according to one of Claims 11 to 14, characterized in that the die mould (2) comprises means for the bordering of identical or different decorative materials (1', 1'') on both sides of a rim 7'.

16. Device according to one of Claims 11 to 15, characterized in that the die mould (2) comprises means for the bordering of a decorative material (1') on one side of a rim (7') and for forming an insert (1''') on the other side, the insert comprising the same material as the rim (7').

17. Device according to one of Claims 11 to 16, characterized in that the die mould (2) comprises means for forming a narrowing on one side or on two sides in the rim 7', with the result that a flexible connection can be made between the decorative materials (1') and (1'') and the insert (1''').

18. Border of a decorative material, in particular a carpet, a fabric or a sheet, which can be formed in a die mould (2) for back-pressing and/or back-injection, at least on parts of an edge (3) of this decorative material (1) and comprises a rim (7) which extends essentially at right angles to the main direction of extent and along at least part of the edge (3) of this decorative material (1), characterized by a multiplicity of fingers (9), integrally formed on this rim (7), for forming a subdivided flexible longitudinal structure of this border (4), the fingers (9) engaging over and/or under the decorative material (1), and being capable of being produced in one piece with the rim (7) and of being connected to the decorative material (1) in the same operation.

19. Border of a decorative material according to Claim 18, characterized in that at least some of the fingers (9) are connected, in the region of their tips, to the tips of the adjacent fingers via a transverse web (24).

## Revendications

1. Procédé pour l'encadrement d'une matière de décoration (1), en particulier d'un tapis, d'un tissu, respectivement d'une feuille, dans lequel on réalise dans un moule (2) pour le moulage par compression et/ou le moulage par injection du côté dorsal, au moins sur des parties d'un bord (3) de cette matière de décoration (1), un encadrement (4), qui comprend les étapes indiquées ci-après consistant à:
• insérer une matière de décoration (1) dans une cavité (6) du moule (2) formée par des moitiés de moule (2', 2");
• introduire une matière (5) apte à s'écouler dans la cavité (6);
• fermer le moule (2);
• distribuer la matière (5) apte à s'écouler dans la cavité (6);
• éjecter la matière de décoration encadrée (1) après durcissement au moins partiel de la matière;
**caractérisé par** les étapes ci-après consistant à:
• réaliser en une seule pièce une bordure (7), qui s'étend essentiellement à angle droit par rapport à la direction d'allongement principal et le long du bord (3) de cette matière de décoration (1), ainsi qu'une multitude de doigts (9) qui s'étendent par-dessus la matière de décoration (1);
• relier la bordure (7) et les doigts (9) avec la matière de décoration (1).

2. Procédé selon la revendication 1, **caractérisé en ce qu'**on réalise la bordure (7) de telle sorte qu'elle fasse saillie par rapport au niveau (10) de la direction d'allongement principal de la matière de décoration (1).

3. Procédé selon la revendication 1 ou 2, **caractérisé par** un façonnement d'une bride (11) sur le côté inférieur de la bordure (7), s'étendant par-dessous la matière de décoration (1).

4. Procédé selon la revendication 3, **caractérisé en ce que** les brides (11) sont reliées au moins par endroits avec des barres (12) qui forment une grille de support (13) pour la matière de décoration (1).

5. Procédé selon la revendication 3, **caractérisé en ce que** les brides (11) sont reliées au moins par endroits avec une plaque de support (14) pour la matière de décoration (1).

6. Procédé selon la revendication 5, **caractérisé en ce qu'**on pratique des ouvertures (15) dans la plaque de support (14).

7. Procédé selon l'une quelconque des revendications 4 à 6, **caractérisé en ce qu'**on façonne, sur le côté inférieur de la grille de support (13), respectivement de la plaque de support (14), des touffes (16).

8. Procédé selon l'une quelconque des revendications précédentes, **caractérisé en ce qu'**on façonne, sur le côté inférieur de la bordure (7), de la bride (11), respectivement de la plaque de support (14), également des doigts (9) qui s'étendent par-dessous la matière de décoration (1), respectivement la plaque de support (14).

9. Procédé selon l'une quelconque des revendications précédentes, **caractérisé en ce qu'**on façonne, sur le côté externe de la bordure (7), des nervures (17) qui se prolongent par les doigts (9).

10. Procédé selon la revendication 8 ou 9, **caractérisé en ce que** les doigts (9) sont façonnés sur le côté supérieur et sur le côté inférieur de la bordure (7) en une succession alternante.

11. Dispositif pour l'encadrement d'une matière de décoration (1), en particulier d'un tapis, d'un tissu, respectivement d'une feuille, qui comprend un moule (2) pour le moulage par compression et/ou le moulage par injection du côté dorsal, avec lequel on peut réaliser un encadrement (4) au moins à certains endroits du bord (3) de cette matière de décoration (1), **caractérisé en ce que** ce moule (2) présente des évidements qui sont réalisés pour le façonnement de doigts (9), partant pour l'écoulement avec une matière (5) autour du bord (3) de la matière de décoration (1) et pour un encadrement de ce dernier, et en ce que ce moule (2) présente des brides de retenue (23) par lesquelles les évidements peuvent être séparés les uns des autres et au moyen desquelles la matière de décoration (1) - pour empêcher des déformations du bord (3) - peut être positionnée, dans lequel ces brides de retenue (23) aboutissent à l'évidement pour une bordure (7) qui s'étend essentiellement à angle droit par rapport à la direction d'allongement principal et le long du bord (3) de cette matière de décoration (1) et qui peut être réalisée en une seule pièce avec une multitude de doigts (9) qui s'étendent par-dessus et/ou par-dessous la matière de décoration (1) et qui peut être reliée dans la même étape opératoire avec la matière de décoration (1).

12. Dispositif selon la revendication 11, **caractérisé en ce que** le moule (2) comprend des moyens pour le façonnement d'une bride (11), d'une grille de support (13), respectivement d'une plaque de support (14) sur cette bordure (7).

13. Dispositif selon la revendication 12, **caractérisé en ce que** le moule (2) comprend des moyens pour le façonnement de touffes (16) sur la bride (11), sur la grille de support (13), respectivement sur la plaque de support (14).

14. Dispositif selon la revendication 12, **caractérisé en ce que** le moule (2) comprend des moyens pour le façonnement de nervures de renforcement (18) sur la plaque de support (14).

15. Dispositif selon l'une quelconque des revendications 11 à 14, **caractérisé en ce que** le moule (2) comprend des moyens pour l'encadrement de matières de décoration identiques ou différentes (1', 1") de part et d'autre d'une bordure (7').

16. Dispositif selon l'une quelconque des revendications 11 à 15, **caractérisé en ce que** le moule (2) comprend des moyens pour l'encadrement d'une matière de décoration (1') sur un côté d'une bordure (7') et pour la réalisation d'une pièce rapportée (1"') sur l'autre côté, la pièce rapportée comprenant la même matière que celle de la bordure (7').

17. Dispositif selon l'une quelconque des revendications 11 à 16, **caractérisé en ce que** le moule (2) comprend des moyens pour réaliser un rétrécissement unilatéral ou bilatéral dans la bordure (7') par lequel on peut réaliser une liaison flexible entre les matières de décoration (1') et (1"), respectivement la pièce rapportée (1"').

18. Encadrement d'une matière de décoration, en particulier d'un tapis, d'un tissu, respectivement d'une feuille, qui peut être réalisé dans un moule (2) pour le moulage par compression et/ou le moulage par injection du côté dorsal, au moins à certains endroits d'un bord (3) de cette matière de décoration (1) et qui comprend une bordure (7) qui s'étend essentiellement à angle droit par rapport à la direction d'allongement principal et le long d'au moins une partie du bord (3) de cette matière de décoration (1), **caractérisé par** une multitude de doigts (9) façonnés sur cette bordure (7) pour la réalisation d'une structure longitudinale flexible articulée de cet encadrement (4), dans lequel les doigts (9) s'étendent par-dessus et/ou par-dessous la matière de décoration (1) et peuvent être réalisés en une seule pièce avec la bordure (7) et peuvent être reliés dans la même étape opératoire avec la matière de décoration (1).

19. Encadrement d'une matière de décoration selon la revendication 18, **caractérisé en ce qu'**au moins une partie des doigts (9) sont reliés dans la zone de leur pointe avec les pointes des doigts voisins via une bride transversale (24).
